# EUROPÄISCHE PATENTSCHRIFT

(11) **EP 0 715 062 B1**
(45) Veröffentlichungstag und Bekanntmachung des Hinweises auf die Patenterteilung: **03.05.2000**
(21) Anmeldenummer: 95116844.2
(22) Anmeldetag: 26.10.1995
(51) Int. Cl.: F01N 3/20, F02D 41/06

(54) **Verfahren zur Reduzierung von Schadstoffen des Abgases einer mehrere Zylinder aufweisenden Brennkraftmaschine**
Method for reducing pollutant of the exhaust gas of a multi-cylinder internal combustion engine
Procédé pour réduire les émissions nocines des gaz d'échappement d'un moteur à combustion interne ayant plusieurs cylindres

(30) Priorität: 02.12.1994 DE 4442883
(43) Veröffentlichungstag der Anmeldung: 05.06.1996
(73) Patentinhaber: Volkswagen Aktiengesellschaft, 38436 Wolfsburg (DE)
(72) Erfinder: Waschatz, Uwe, Dr., D-38527 Meine (DE); Wehling, Wolfgang, D-38112 Braunschweig (DE)

(56) Entgegenhaltungen:
- DE-A- 4 029 672
- US-A- 5 249 560
- PATENT ABSTRACTS OF JAPAN vol. 18 no. 408 (M-1647) ,29.Juli 1994 & JP-A-06 117304 (NIPPONDENSO) 26 April 1994
- PATENT ABSTRACTS OF JAPAN Bd. 095, Nr. 007 31 August 1995 & JP-A-07 103034 (UNISIA JECS CORP) 18 April 1995
- BEITZ W., KUETTNER K.-H.: 'Dubbel Taschenbuch für den Maschinenbau', 1987, 16. AUFLAGE, SPRINGER VERLAG, BERLIN, HEIDELBERG * Page 71 *

## Beschreibung

Die Erfindung betrifft ein Verfahren zur Reduzierung von Schadstoffen im Abgas einer mehrere Zylinder aufweisenden Brennkraftmaschine eines Kraftfahrzeuges mit einer in einer Abgasleitung der Brennkraftmaschine angeordneten Abgasreinigungsvorrichtung (Katalysator), bei dem das Luft/Kraftstoffverhältnis der Brennkraftmaschine derart eingestellt wird, daß im Gesamtabgasstrom aller Zylinder ein Lambdawert im Bereich von 1 eingestellt ist. Um die Schadstoffe im Abgas einer mit einem Luft-Kraftstoffgemisch betriebenen Brennkraftmaschine zu reduzieren, wird das Abgas in der Abgasreinigungsvorrichtung katalytisch entgiftet. Hierbei werden die im Abgas enthaltenen, nicht verbrannten Kohlenwasserstoffe zu Kohlendioxyd und Wasser und das ebenfalls im Abgas vorhandene Kohlenmonoxyd zu Kohlendioxyd oxydiert, wobei derartige Oxydationsvorgänge die Anwesenheit von Sauerstoff im Abgas erforderlich machen. Die Stickstoffoxyde, die bei der Verbrennung des Luft-Kraftstoffgemisches in der Brennkraftmaschine als Reaktionsprodukt von Sauerstoff mit Stickstoff aus der Luft anfallen, reagieren im Katalysator der Abgasreinigungsvorrichtung mit dem im Abgas vorhandenen Kohlenmonoxyd unter Bildung von Stickstoff und Kohlendioxyd.

Aus dem Grundgedanken heraus, daß die Zufuhr von Zusatzluft zu einer erheblichen Senkung der Kohlenwasserstoffe und des Kohlenmonoxyds im Abgas führt, ist es bekannt, daß Abgassystem mit Sekundärluft zu versorgen. In der US - PS 43 45 432 ist eine Brennkraftmaschine beschrieben, bei der der Schadstoffausstoß während der Warmlaufphase nach einem Kaltstart minimiert wird, indem in die Abgasleitung Sekundärluft vor ein Katalysatorvolumen eingeblasen wird. Zu diesem Zweck ist eine von der Kurbelwelle der Brennkraftmaschine angetriebene Sekundärluftpumpe vorgesehen, die gesteuert Luft in die Abgasleitung abgibt. Eine solche Sekundärluftpumpe erhöht jedoch das Gewicht und reduziert die nutzbare Leistung der Brennkraftmaschine.

Zur Vermeidung dieses Nachteils wird in der Deutschen Patentschrift DE - 40 29 672 C2 vorgeschlagen, in den Betriebsbereichen der Brennkraftmaschine, während derer der Katalysator keine ausreichende Reinigungswirkung aufweist, vor allem in der Warmlaufphase nach einem Kaltstart, solange der Katalysator noch nicht seine Anspringtemperatur erreicht hat, die Kraftstoffzufuhr zu einem Zylinder der Brennkraftmaschine zu unterbrechen. Dieser Zylinder fördert also nur noch Frischluft, die direkt über die Abgasleitung zum Eingang des Katalysators gelangt. Diese Frischluft ruft dabei durch Oxydation eine Vorreaktion in der Abgasrohemission hervor, die den Schadstoffanteil senkt, solange der Katalysator noch nicht auf seine Betriebstemperatur gekommen ist. Eine solche Abschaltung einzelner Zylinder bewirkt einerseits ein zeitweises Abkühlen der Zylinderwandung, wodurch Verspannungen in der Zylinderwandung auftreten können. Außerdem kann das Abkühlen der Zylinderwandung zum Absetzen von Kraftstoffkomponenten, insbesondere von Kohlenwasserstoffen, führen. Ein weiteres Problem besteht darin, daß die Abschaltung eines Zylinders bei Brennkraftmaschinen mit 4 oder wenigeren Zylindern Drehmomenteneinbrüche hervorruft, die von den Insassen des Fahrzeuges als unangenehm empfunden werden.

Ferner ist bekannt aus JP-A-06117304 ein Verfahren zur Reduzierung von Schadstoffen im Abgas einer dreizylindrigen Brennkraftmaschine mit einer Abgasreinigungsvorrichtung, wobei ein Zylinder mit einem mageren Luft/Kraftstoffverhältnis und die übrigen Zylinder mit einem fetten Luft/Kraftstoffverhältnis betrieben werden.

Die Aufgabe der Erfindung besteht darin, ein Verfahren zu schaffen, das weder Komfortprobleme, hervorgerufen durch Drehmomenteneinbrüche, noch ein zeitweises Abkühlen der Zylinderwandung verursacht, bei dem jedoch die Schadstoffe vor und nach der Abgasreinigung deutlich reduziert werden.

Die Aufgabe wird durch die Merkmale des Patentanspruchs gelöst, vorteilhafte Weiterbildungen sind in den Unteransprüchen dargestellt.

Bei einer gattungsgemäßen mehrzylindrischen Brennkraftmaschine ist vorgesehen, daß abwechselnd mindestens ein Zylinder mit einem mageren Luft/Kraftstoff-Verhältnis und die übrigen Zylinder mit einem fetten Luft/Kraftstoff-Verhältnis betrieben werden, wobei in der Summe der Abgasströme aller Zylinder ein Lambdawert im Bereich von 1 eingestellt wird, wodurch mit einer bestimmten Frequenz in der Abgasleitung der Brennkraftmaschine mit einem Sauerstoffüberschuß zur Oxydation sowohl der Kohlenmonoxyde und der Kohlenwasserstoffe und einem Kohlenmonoxydüberschuß zur Reduktion der Stickstoffoxyde gearbeitet wird. Die Größe des mageren oder fetten Luft/Kraftstoff-Verhältnisses erfolgt erfindungsgemäß in Abhängigkeit von Betriebsbedingungen der Brennkraftmaschine beispielsweise der Drehzahl oder der Last (Drosselklappenstellung). Dies ist insbesondere während der Beschleunigungsphasen des Fahrzeuges zur Verbesserung des Fahrverhaltens und des Komforts als auch bei hohen Lasten zur Vermeidung von Leistungseinbußen von Vorteil. Dies kann vorteilhaft zeitweise in Bereichen, wenn die Abgasreinigungsvorrichtung (Katalysator) keine ausreichende Reinigungswirkung aufweist, also der Katalysator hat seine Anspringtemperatur noch nicht erreicht oder die Anspringtemperatur während einer bestimmten Zeitdauer unterschritten wird, vorzugsweise in der Warmlaufphase der Brennkraftmaschine nach einem Kaltstart oder bei geringen Motordrehzahlen, beispielsweise im Leerlauf, zur Erhöhung der Katalysatortemperatur geschehen. In der übrigen Zeit wird auf eine herkömmliche Lambda-Regelung umgeschaltet. Im Fall eines zeitweisen Betriebes einzelner oder mehrerer Zylinder mit einem mageren oder einem fetten Luft/Kraftstoff-Verhältnis im Wechsel erfolgt die Umschaltung zur normalen Lambda-Regelung oder umgekehrt in Abhängigkeit der Temperatur der Abgasreinigungsvorrichtung bzw. der Temperatur des Kühlwassers der Brennkraftmaschine und/oder der Drehzahl oder Last der Brennkraftmaschine.

Eine andere vorteilhafte Ausgestaltung der Erfindung besteht darin, die Brennkraftmaschine kontinuierlich derart zu betreiben, daß wechselnd mindestens ein Zylinder mit einem mageren Luft/Kraftstoff-Verhältnis und die übrigen Zylinder mit einem fetten Luft/Kraftstoff-Verhältnis betrieben werden. Durch den zeitlichen Wechsel zwischen mageren und fetten Luft/Kraftstoff-Verhältnis ist es neben den Vorteilen in der Warmlaufphase oder bei niedrigen Drehzahlen möglich, Abgasreinigungsvorrichtungen mit Katalysatoren geringeren Speichervermögen einzusetzen oder die Alterung der Katalysatoren und damit das geringere Speichervermögen und die schlechtere Anspringtemperatur zu kompensieren. Durch sein Speichervermögen ist ein Katalysator in der Lage, während Phasen eines Sauerstoffüberschußes in der Abgasleitung überschüssigen Sauerstoff zu speichern, den er in Phasen eines fetten Luft/Kraftstoff-Gemisches wieder abgibt, um die zu oxydierenden Schadstoffe zu konvertieren. Die Steuerung der Frequenz des Wechsels zwischen einem mageren und einem fetten Luft/Kraftstoff-Verhältnis kann in Abhängigkeit des Ausgangssignals eines Sauerstoffsensors nach dem Katalysator erfolgen. Bei Katalysatoren mit geringem Speichervermögen erfolgt der Wechsel zwischen einem mageren und einem fetten Luft/Kraftstoff-Verhältnis vorzugsweise im Zündtakt.

Der Vorteil des erfindungsgemäßen Verfahrens liegt neben eines schnelleren Aufheizens des Katalysators der Abgasreinigungsvorrichtung auch in der Reduzierung der Rohemission vor dem Katalysator.

Nachfolgend wird die Erfindung anhand eines Ausführungsbeispiels näher beschrieben. Die zugehörigen Zeichnungen zeigen:
- Fig. 1: eine schematische Darstellung der Regelung anhand eines Zylinders der Brennkraftmaschine,
- Fig. 2a bis 2c: einen Verlauf des Luft/Kraftstoff-Verhältnisses einer vierzylindrischen Brennkraftmaschine in Abhängigkeit des Kurbelwinkels,
- Fig. 3: einen Verlauf der Stickstoffoxydemission in Abhängigkeit der Lambdawerte und der Spreizung zwischen mageren und fetten Luft/Kraftstoffverhältnis und
- Fig. 4: einen Verlauf der Kohlenwasserstoffemission in Abhängigkeit der Lambdawerte und der Spreizung zwischen mageren und fetten Luft/Kraftstoffverhältnis.

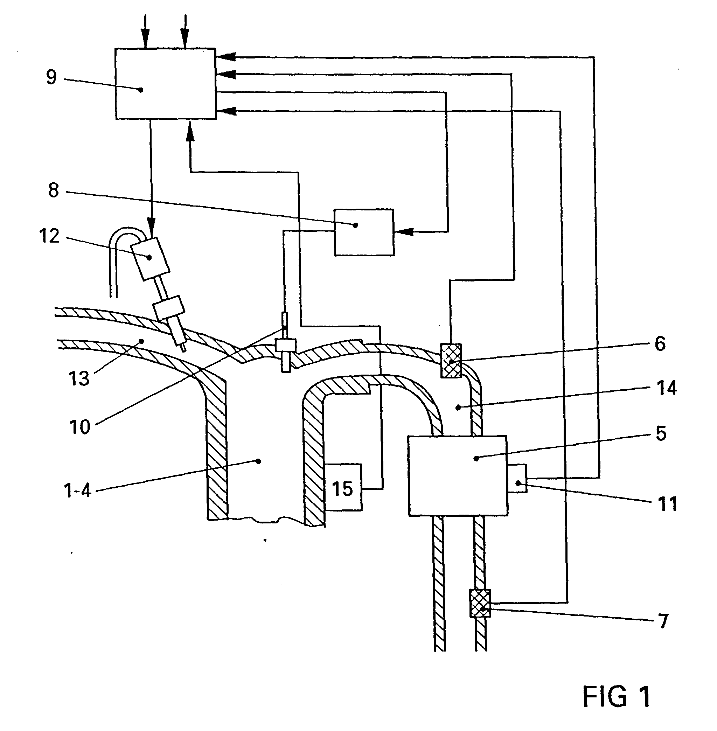

In Fig. 1 ist ein Zylinder 1 - 4 einer vierzylindrischen Brennkraftmaschine mit einer Saugrohr-Kraftstoffeinspritzung über ein Einspritzventil 12 dargestellt. Das erfindungsgemäße Verfahren ist jedoch auch bei einer Brennkraftmaschine mit einer direkten Kraftstoffeinspritzung anwendbar. Die Versorgung des Zylinders zur Einstellung des Luft/Kraftstoff-Verhältnisses mit Frischluft erfolgt über die Zuleitung 13. Die Brennkraftmaschine weist ferner eine mit jedem der Zylinder verbundene Abgasleitung 14 mit einem Katalysator 5 und je einem als Lambdasonde ausgebildeten Sauerstoffsensor 6, 7 vor und nach dem Katalysator 5 auf.

Die Zündeinrichtung 8 gibt in Abhängigkeit von der Steuereinrichtung 9 erhaltenen Signalen ein Zündsignal an die Zündkerze 10 zur Zündauslösung, wenn ein entsprechendes, ebenfalls von der Steuereinrichtung 9 gesteuertes Luft/Kraftstoff-Verhältnis im Zylinder 1 - 4 vorliegt. Das Luft/Kraftstoff-Verhältnis wird einmal abhängig von den Betriebsbedingungen der Brennkraftmaschine, z. B. der Drehzahl und der Last, und andererseits in Abhängigkeit der Ausgangssignale des Sauerstoffsensors 6 mit Hilfe einer herkömmlichen Lambda-Regelung auf einen Wert Lambda = 1 in der Gesamtabgasleitung 14 eingestellt. Zur Minimierung der Schadstoffemission vor und nach dem Katalysator 5 erfolgt dabei die Bildung des Luft/Kraftstoff-Gemisches der einzelnen Zylinder 1 - 4 wechselnd mit einem mageren und einem fetten Luft/Kraftstoff-Verhältnis.

Gemäß der Erfindung erfolgt die Einstellung des Luft/Kraftstoff-Verhältnisses der Zylinder 1 bis 4 unter Beachtung der Betriebsbedingungen der Brennkraftmaschine nach verschiedenen sensierten Parametern. Dies sind beispielsweise die Drehzahlen oder die Last der Brennkraftmaschine. Dadurch wird gewährleistet, daß es bei Beschleunigungsvorgängen nicht zu Problemen des Fahrverhaltens oder bei hohen Lastpunkten zu Leistungseinbußen kommt. Eine andere Möglichkeit besteht darin, die Einstellung in Abhängigkeit der über dem Temperaturfühler 15 ermittelten Kühlwassertemperatur der Brennkraftmaschine vorzunehmen, wobei unterhalb eines definierten Schwellwertes oder bei Unterschreitung des Schwellwertes über eine bestimmte Zeitdauer die Einstellung des Luft/Kraftstoff-Verhältnisses nach der Erfindung in Verbindung mit einer üblichen Lambda = 1-Regelung und oberhalb des Temperaturschwellwertes nur nach einer üblichen Lambda = 1-Regelung erfolgt. Damit kann die Schadstoffkonzentration insbesondere in der Warmlaufphase nach dem Kaltstart oder im Leerlauf der Brennkraftmaschine minimiert werden. Eine weitere Ausführung sieht vor, bei Katalysatoren 5 mit geringem Speichervermögen und schlechterer Anspringtemperatur das Luft/Kraftstoff-Verhältnis der einzelnen Zylinder 1 bis 4 abwechselnd mager und fett ohne zeitliche Begrenzung zu steuern, wobei die Einstellung beispielsweise in Abhängigkeit der über den Sauerstoffsensor erfaßten Sauerstoffkonzentration nach dem Katalysator 5 oder der Differenz zwischen der Sauerstoffkonzentration vor und nach dem Katalysator erfolgt.

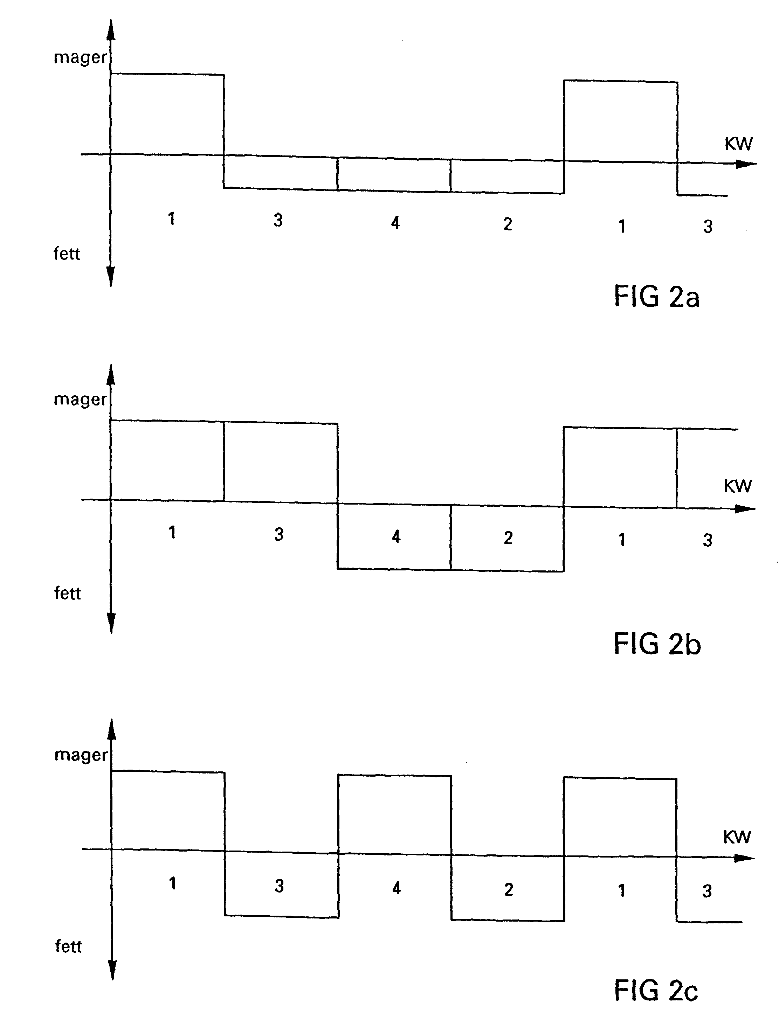

In den Fig. 2a bis 2c sind verschiedene Möglichkeiten der Einstellung der Luft/Kraftstoff-Verhältnisse der einzelnen Zylinder 1 bis 4 einer vierzylindrischen Brennkraftmaschine über den Kurbelwellenwinkel KW gezeigt. Ähnliches gilt jedoch auch für Brennkraftmaschinen mit einer größeren Anzahl von Zylindern. In Fig. 2a wird der Zylinder 1 immer mit einem mageren Luft/Kraftstoff-Verhältnis und alle anderen Zylinder 2, 3, 4 mit einem fetten Luft/Kraftstoff-Verhältnis betrieben. Zu beachten ist dabei, daß die Höhe der Luft/Kraftstoff-Verhältnisse immer so eingestellt wird, daß in der Summe in der Abgasleitung eine Sauerstoffkonzentration im Bereich von Lambda = 1 vorherrscht. Eine weitere Möglichkeit der Verteilung der Luft/Kraftstoff-Verhältnisse zwischen den einzelnen Zylindern 1 bis 4 ist in Fig. 2b dargestellt. Eine solche Einstellung kann beispielsweise dann notwendig sein, wenn ein einzelner Zylinder nicht mit einem mageren oder fetten Luft/Kraftstoff-Verhältnis über einen bestimmten Schwellwert betrieben werden kann. Zur Kompensation eines geringeren Speichervermögens des Katalysators 5 kann es, wie Fig. 2c zeigt, weiterhin notwendig sein die Frequenz des Wechsels auf den Zündtakt zu erhöhen, so daß die Zylinder 1 bis 4 alternierend betrieben werden.

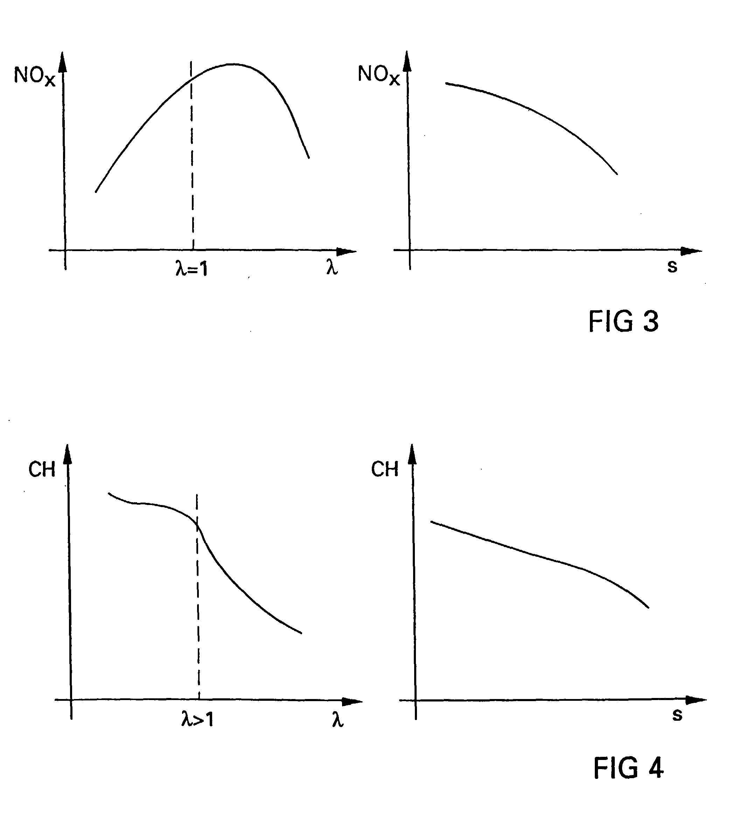

Die Erfindung hat neben dem schnelleren Aufheizen des Katalysators in der Warmlaufphase nach dem Kaltstart und der Kompensation eines geringeren Speichervermögens des Katalysators den Vorteil, daß die Rohemission der Brennkraftmaschine in der Abgasleitung 14 verringert wird. Die Fig. 3 und 4 zeigen zur Verdeutlichung den Verlauf der Stickstoffoxydemission NOₓ und der Kohlenwasserstoffemission CH über den Lambdawert und der Spreizung S zwischen dem mageren und dem fetten Luft/Kraftstoffverhältnis der einzelnen Zylinder. Aus den Verläufen ist erkennbar, daß die Stickstoffoxydemission NOₓ im Bereich Lambda = 1 ihre größten Werte aufweist, die Kohlenwasserstoffemission CH steigt im Bereich Lambda < 1 (fettes Luft/Kraftstoff-Verhältnis) nur noch wenig an, fällt aber im Bereich Lambda > 1 (mageres Luft/Kraftstoffverhältnis) stärker ab, so daß bei einer Gemischverteilung zwischen den Zylindern mit mageren und fetten Luft/Kraftstoffverhältnis eine Rohemissionsreduzierung erzielt werden kann.

### BEZUGSZEICHEN

- 1: Zylinder
- 2: Zylinder
- 3: Zylinder
- 4: Zylinder
- 5: Katalysator
- 6: Sauerstoffsensor
- 7: Sauerstoffsensor
- 8: Zündeinrichtung
- 9: Steuereinrichtung
- 10: Zündkerze
- 11: Temperaturfüller
- 12: Einspritzventil
- 13: Zuleitung
- 14: Abgasleitung
- 15: Temperaturfühler

## Patentansprüche

1. Verfahren zur Reduzierung von Schadstoffen im Abgas einer mehrere Zylinder aufweisenden Brennkraftmaschine eines Kraftfahrzeuges mit einer in einer Abgasleitung der Brennkraftmaschine angeordneten Abgasreinigungsvorrichtung, bei dem das Luft/Kraftstoffverhältnis der Brennkraftmaschine derart eingestellt wird, daß im Gesamtabgasstrom aller Zylinder ein Lambdawert im Bereich von 1 eingestellt ist, daß mindestens ein Zylinder (1 - 4) mit einem mageren Luft/Kraftstoff-Verhältnis und die übrigen Zylinder (1 - 4) mit einem fetten Luft/Kraftstoff-Verhältnis betrieben werden, dadurch gekennzeichnet, daß die Größe des mageren oder fetten Luft/Kraftstoff-Verhältnisses der einzelnen Zylinder (1 - 4) in Abhängigkeit der Betriebsbedingungen der Brennkraftmaschine vorgegeben werden.

2. Verfahren nach Anspruch 1, dadurch gekennzeichnet, daß die Zylinder (1 - 4) alternierend mit einem fetten und einem mageren Luft/Kraftstoff-Verhältnis betrieben werden.

3. Verfahren nach Anspruch 1 oder 2, dadurch gekennzeichnet, daß die Verteilung der Zylinder (1 - 4) zwischen fettem und magerem Luft/Kraftstoff-Verhältnis in Abhängigkeit der Betriebsbedingungen der Brennkraftmaschine vorgegeben wird.

4. Verfahren nach einem der Ansprüche 1 bis 3, dadurch gekennzeichnet, daß der Wechsel zwischen einem mit einem mageren und einem fetten Luft/Kraftstoff-Verhältnis betriebenen Zylinder (1 bis 4) im Zündtakt erfolgt.

5. Verfahren nach einem der Ansprüche 1 bis 4, dadurch gekennzeichnet, daß unterhalb eines Temperaturschwellwertes mindestens ein Zylinder mit einem mageren Luft/Kraftstoff-Verhältnis und die übrigen Zylinder mit einem fetten Luft/Kraftstoff-Verhältnis betrieben werden und oberhalb des Temperaturschwellwertes die Brennkraftmaschine mit einer herkömmlichen Lambda = 1-Regelung betrieben wird, wobei der Temperatur-Schwellwert ein Schwellwert der Temperatur der Brennkraftmaschine oder der Abgasreinigungseinrichtung ist.

6. Verfahren nach Anspruch 5, dadurch gekennzeichnet, daß bei Unterschreitung des Temperaturschwellwertes über eine vorgegebene Zeit mindestens ein Zylinder (1 - 4) mit einem mageren Luft/Kraftstoff-Verhältnis und die übrigen Zylinder mit einem fetten Luft/Kraftstoff-Verhältnis betrieben werden.

## Claims

1. Process for reducing pollutants in exhaust gas of a multiple-cylinder internal combustion engine of a motor vehicle having an exhaust gas cleaning device disposed in an exhaust gas line of the internal combustion engine, wherein the air/fuel ratio of the internal combustion engine is adjusted in such a way that in the total exhaust gas stream of all the cylinders a lambda value in the range of 1 is set, that at least one cylinder (1 - 4) is operated with a lean air/fuel ratio and the remaining cylinders (1 - 4) are operated with a rich air/fuel ratio, characterised in that the magnitudes of the lean or rich air/fuel ratio of the individual cylinders (1 - 4) are predetermined in dependence upon the operating conditions of the internal combustion engine .

2. Process according to claim 1, characterised in that the cylinders (1 - 4) are operated alternately with a rich and with a lean air/fuel ratio.

3. Process according to claim 1 or 2, characterised in that the division of the cylinders (1 - 4) between rich and lean air/fuel ratio is predetermined in dependence upon the operating conditions of the internal combustion engine .

4. Process according to one of claims 1 to 3, characterised in that the change between a cylinder (1 to 4) operated with a lean air/fuel ratio and a cylinder (1 to 4) operated with a rich air/fuel ratio takes placed in the ignition phase.

5. Process according to one of claims 1 to 4, characterised in that below a temperature threshold value at least one cylinder is operated with a lean air/fuel ratio and the remaining cylinders are operated with a rich air/fuel ratio and above the temperature threshold value the internal combustion engine is operated with a conventional lambda = 1-control, wherein the temperature threshold value is a threshold value of the temperature of the internal combustion engine or of the exhaust gas cleaning device.

6. Process according to claim 5, characterised in that when the temperature falls below the temperature threshold value for a predetermined time at least one cylinder (1 - 4) is operated with a lean air/fuel ratio and the remaining cylinders are operated with a rich air/fuel ratio.

## Revendications

1. Procédé destiné à la réduction de substances nocives contenues dans les gaz d'échappement d'un moteur à combustion interne à plusieurs cylindres d'un véhicule automobile, comportant un dispositif d'épuration de gaz d'échappement disposé dans une tubulure de gaz d'échappement du moteur à combustion interne, selon lequel le rapport air/carburant du moteur à combustion interne est réglé de telle sorte qu'une valeur lambda voisine de 1 soit réglée dans l'ensemble du flux des gaz d'échappement de tous les cylindres, qu'au moins un cylindre (1-4) fonctionne avec un rapport air/carburant pauvre et les autres cylindres (1-4) avec un rapport air/carburant riche, caractérisé en ce que l'importance du rapport air/carburant pauvre ou riche des différents cylindres (1-4) est prédéfinie en fonction des conditions de fonctionnement du moteur à combustion interne.

2. Procédé selon la revendication 1, caractérisé en ce que les cylindres (1-4) fonctionnent en alternance avec un rapport air/carburant riche et pauvre.

3. Procédé selon la revendication 1 ou 2, caractérisé en ce que la répartition des cylindres (1-4) entre un rapport air/carburant riche et pauvre est prédéfinie en fonction des conditions de fonctionnement du moteur à combustion interne.

4. Procédé selon l'une quelconque des revendications 1 à 3, caractérisé en ce que l'alternance entre un cylindre (1-4) fonctionnant avec un rapport air/carburant pauvre et riche est effectuée à la cadence d'allumage.

5. Procédé selon l'une quelconque des revendications 1 à 4, caractérisé en ce que, au-dessous d'une valeur de seuil de température, au moins un cylindre fonctionne avec un rapport air/carburant pauvre et les autres cylindres avec un rapport air/carburant riche, et en ce que, au-delà de la valeur de seuil de température, le moteur à combustion interne fonctionne avec une régulation lambda = 1 classique, la valeur de seuil de température étant une valeur de seuil de la température du moteur à combustion interne ou du dispositif d'épuration des gaz d'échappement.

6. Procédé selon la revendication 5, caractérisé en ce que, lorsque la valeur de seuil de la température n'est pas atteinte pendant un intervalle de temps prédéfini, au moins un cylindre (1-4) fonctionne avec un rapport air/carburant pauvre et les autres cylindres avec un rapport air/carburant riche.
